(19) Europäisches Patentamt / European Patent Office / Office européen des brevets

(11) **EP 2 960 185 B1**

(12) **EUROPÄISCHE PATENTSCHRIFT**

(45) Veröffentlichungstag und Bekanntmachung des Hinweises auf die Patenterteilung:
**29.11.2017 Patentblatt 2017/48**

(51) Int Cl.:
**B65G 1/10** *(2006.01)* **A47B 53/02** *(2006.01)*

(21) Anmeldenummer: **15168580.7**

(22) Anmeldetag: **21.05.2015**

(54) **VERFAHREN ZUM FAHREN EINES REGALS EINER REGALANLAGE**

METHOD OF OPERATING A SHELF OF A SHELVING UNIT

PROCÉDÉ DE GUIDAGE D'UNE ÉTAGÈRE D'UN RAYONNAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2014 DE 102014108827**

(43) Veröffentlichungstag der Anmeldung:
**30.12.2015 Patentblatt 2015/53**

(73) Patentinhaber: **BITO-Lagertechnik Bittmann GmbH**
**55590 Meisenheim (DE)**

(72) Erfinder: **Dick, Oliver**
**55569 Monzingen (DE)**

(74) Vertreter: **Richardt Patentanwälte PartG mbB**
**Wilhelmstraße 7**
**65185 Wiesbaden (DE)**

(56) Entgegenhaltungen:
JP-A- H0 522 995  JP-A- 2001 048 314
JP-A- 2002 096 907  US-A- 4 743 078
US-A- 5 842 585  US-A1- 2004 226 256

EP 2 960 185 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Fahren eines Regals einer Mehrzahl von Regalen einer Regalanlage sowie ein Regal einer Regalanlage.

Die US 2004/0226256 A1 offenbart ein Regalsystem mit einer Vielzahl von relativ zueinander beweglichen Regalen. Die Regale werden durch elektrische Motoren entlang von Schienen oder auf eigenen Rädern angetrieben. An den äußeren Enden der Regale sind Abstandssensoren angebracht, die den Abstand zum jeweils nächsten Regal messen. Wenn sich die Messwerte zwischen dem linken und rechten Sensor unterscheiden, werden die Motoren der rechten bzw. linken Räder so angesteuert, dass das Schräglaufen des Regals eliminiert wird.

Der Erfindung liegt die Aufgabe zugrunde, ein verbessertes Verfahren zum Fahren eines Regals einer Regalanlage sowie ein verbessertes Regal bereitzustellen. Die der Erfindung zugrunde liegenden Aufgaben werden durch die Merkmale der unabhängigen Patentansprüche gelöst. Bevorzugte Ausführungsformen der Erfindung sind in den abhängigen Patentansprüchen angegeben.

Es wird ein Verfahren zum Fahren eines Regals einer Mehrzahl von fahrbaren bzw. fahrenden Regalen einer Regalanlage in eine Fahrtrichtung angegeben, wobei sich das Regal senkrecht zur Fahrtrichtung erstreckt, wobei das Regal in der Erstreckungsrichtung gesehen zumindest zwei Antriebsräder an einander gegenüberliegenden Seiten des Regals und zwei Abstandssensoren an den einander gegenüberliegenden Seiten, zum Beispiel den Enden des Regals, aufweist, wobei jeder Abstandssensor einem der Antriebsräder zugeordnet ist. Das Verfahren umfasst:

a) Antrieb der Antriebsräder mit einer maximalen Drehzahl,

b) durch jeden der Abstandssensoren, Bestimmung des Abstands des Regals im Bereich der Sensorposition zu einem dem Regal vorausfahrenden Regal,

c) Bestimmung des Antriebsrads als Master-Antriebsrad, dessen Sensor den größten Abstand zum vorausfahrenden Regal bestimmt hat, und Bestimmung des Antriebsrades als Slave-Antriebsrad, dessen Sensor den kleinsten Abstand zum vorausfahrenden Regal bestimmt hat,

d) Verminderung der Drehzahl ausschließlich des Slave-Antriebrads auf eine Solldrehzahl, wobei die Solldrehzahl durch Multiplikation der Drehzahl des Master-Antriebsrads mit einem Reduktionsfaktor erfolgt, wobei der Reduktionsfaktor bestimmt wird als 1 minus dem Absolutwert der normierten Differenz der durch die Sensoren bestimmten Abstände,

e) zyklische Wiederholung der Schritte b - d.

Ausführungsformen der Erfindung könnten verschiedene Vorteile haben. Zum einen könnte durch das Verfahren sichergestellt werden, dass das Regal immer mit der maximal möglichen Geschwindigkeit verfahren wird. Dadurch, dass ausschließlich die Drehzahl des Slave-Antriebsrads reguliert wird und für die Drehzahl des Master-Antriebsrads immer eine maximale Drehzahl verwendet wird, wird also lediglich das vorauseilende Antriebsrad (Slave-Antriebsrad) in seiner Drehzahl beeinflusst, ohne dass dies eine Auswirkung auf das andere Antriebsrad hat. Bei einem beginnenden Schräglauf des Regals findet also keine Zwangsbremsung des gesamten Regals statt, sondern es wird lediglich an einer einzelnen Drehzahl, nämlich an der Drehzahl des Slave-Antriebsrads, korrigiert.

Ein weiterer Vorteil von Ausführungsformen der Erfindung könnte sein, dass die Drehzahlkorrektur des Slave-Antriebsrads in optimaler Weise an die aktuelle Größe des Schräglaufs angepasst wird. Unter Schräglauf wird dabei eine Differenz ungleich null zwischen den durch die Sensoren bestimmten Abstände zum vorausfahrenden Regal verstanden. Liegt zum Beispiel lediglich ein geringer Schräglauf vor, so sorgt das beschriebene Verfahren dafür, dass nur mit minimalem "Bremseingriff" das Slave-Antriebsrad in seiner Drehzahl beeinflusst wird. Erst bei stärkerem Schräglauf, d. h. größeren Differenzen der durch die Sensoren bestimmten Abstände, wird der automatische Eingriff des Systems verstärkt, wodurch insgesamt - das Verfahren auf jedes Regal der verfahrbaren Regalanlage angewendet - ein hochgleichmäßiger Fahrverlauf der gesamten Regalanlage gewährleistet werden könnte.

Dies könnte insbesondere vor dem Hintergrund relevant werden, da die einzelnen Regale vorzugsweise vollkommen autonom und unabhängig von anderen Regalen in der Regalanlage ihre Fahrsteuerung vornehmen. Würde nun an einem einzelnen Regal trotz nur geringem Schräglauf an einem Slave-Antriebsrad eine zu starke Bremswirkung einsetzen, so würde die hieraus resultierende Verlangsamung der Bewegung der entsprechenden Regalseite dieses Slave-Antriebsrads sofort durch einen nachfolgenden Sensor eines nachfolgenden Regals als Korrekturnotwendigkeit detektiert werden. Somit würde selbst bei auch geringem Schräglauf der Bremseingriff das gesamte System der Regalanlage rückgekoppelt von Regal zu Regal negativ beeinflussen. Durch das beschriebene Verfahren könnte solches minimiert werden. Erfindungsgemäss erfolgt die Normierung der Differenz durch eine maximal erlaubte Differenz der durch die Sensoren bestimmten Abstände. Dies könnte den Vorteil haben, dass in vordefinierter Weise der mögliche Schräglauf eines Regals korrigiert werden kann. Je stärker der Schräglauf sich dem durch das System tolerierbaren Maximalwert annähert (maximal erlaubte Differenz), desto stärker erfolgt der Korrektureingriff mit der Verminderung der Drehzahl des Slave-Antriebsrads.

Nach einer Ausführungsform der Erfindung erfolgt die Verminderung der Drehzahl nur dann, wenn die Differenz größer ist als eine minimal erlaubte Differenz, wobei im Fall dessen die Differenz kleiner oder gleich der minimal erlaubten Differenz ist, die beiden Antriebsräder mit der maximalen Drehzahl angetrieben werden. Dies könnte den Vorteil haben, dass die Anzahl der Bremseingriffe am Slave-Antriebsrad minimiert werden. Insbesondere im Falle einer verfahrbaren Regalanlage mit einer Mehrzahl von hintereinander fahrenden Regalen könnte dies ein Risiko eines Sich-Aufschaukeln von fortwährenden minimalen Korrekturbewegungen von nachfahrenden Regalen minimieren.

Nach einer Ausführungsform der Erfindung wird vor der Durchführung von Schritt d) die aktuelle Drehzahl des Master-Antriebsrads gemessen. Dies könnte den Vorteil haben, dass die Korrektur des Schräglaufs effektiver stattfinden kann. Denn dadurch könnte berücksichtigt werden, dass das Master-Antriebsrad nur in theoretischer Weise tatsächlich mit der maximalen Drehzahl angetrieben wird. In der Realität könnte es jedoch so sein, dass sich die Drehzahl des Master-Antriebsrads im laufenden Betrieb ständig ändern kann, je nachdem, wie die Kraftübertragung zwischen Antriebsrad und Boden (zum Beispiel unter Verwendung eine Führungsschiene) möglich ist, wie die aktuellen Reibungsverluste beim Lauf des Master-Antriebsrads über dem Boden sind usw. Insbesondere könnte dadurch auch eine ungleichmäßige Belastung des Regals mit Stückgut berücksichtigt werden, da bei sehr hoher gewichtsmäßiger Belastung des Regals im Bereich des Master-Antriebsrads dieses naturgemäß einer höheren Beanspruchung ausgesetzt ist als wenn im Bereich des Master-Antriebsrads nur eine geringe Gewichtsbelastung aufgrund von auf dem Regal lagernden Stückgut gegeben ist. Die hohe Gewichtsbelastung wiederum wirkt sich auf mögliche Reibungsverluste beim Betrieb des Master-Antriebsrads aus.

Nach einer Ausführungsform der Erfindung wird der Reduktionsfaktor so begrenzt, dass der Reduktionsfaktor einen vorbestimmten minimalen Wert größer null nicht unterschreiten kann. Auch dies könnte den Vorteil haben, dass die Bremseingriffe am Slave-Antriebsrad in sehr ruhiger Weise stattfinden. So wird zum Beispiel insbesondere vermieden, dass ein vollständiges Abbremsen des Slave-Antriebsrads oder gar ein möglicher Rückwärtslauf des Slave-Antriebsrads vermieden wird, obwohl die gemessene Differenz der durch die Sensoren bestimmten Abstände hierzu Veranlassung bieten würde. Anstatt also einen entsprechenden Korrektureingriff in extrem starker Weise durchzuführen, könnte durch die besagte Ausführungsform über eine ggfs. längere Wegstrecke gleichmäßig der Gleichlauf wiederhergestellt werden.

Nach einer weiteren Ausführungsform der Erfindung führt jedes Regal der Regale das beschriebene Verfahren autonom für sich durch. Dies bedeutet, dass vorzugsweise eine Kommunikation der durchgeführten Bremseingriffe und der aktuellen Drehzahlen der Antriebsräder zwischen verschiedenen Regalen nicht stattfindet. Selbstverständlich ist es dennoch möglich, dass durch eine zentrale Notabschaltung der Regalanlage von außen ein vollständiger Stillstand des Fahrens des Regals bestimmt werden kann. Ebenfalls sollte es möglich sein, dass durch eine zentrale Steuerung von außen der Fahrvorgang eines einzelnen Regals der Regalanlage initiiert werden kann. Der eigentliche Fahrvorgang und die Kontrolle des Schräglaufs erfolgt jedoch autonom durch jedes Regal für sich gesehen eigenständig.

In einem weiteren Aspekt betrifft die Erfindung ein Regal einer Regalanlage, wobei das Regal in eine Fahrtrichtung fahrbar ist, wobei sich das Regal senkrecht zur Fahrtrichtung erstreckt, wobei das Regal in Erstreckungsrichtung gesehen zumindest zwei Antriebsräder an einander gegenüberliegenden Seite des Regals und zwei Abstandssensoren an einer gegenüberliegenden Seite des Regals aufweist, wobei jeder Abstandssensor einem Antriebsrad zugeordnet ist, wobei das Regal eine Steuereinheit aufweist mit einem Speicher und einem Prozessor, wobei der Speicher durch den Prozessor ausführbare Anweisungen aufweist, wobei aufgrund der Anweisungen folgende Schritte ausführbar sind:

a) Antrieb der Antriebswelle mit einer maximalen Drehzahl,

b) durch jeden der Abstandssensoren, Bestimmung des Abstands des Regals im Bereich der Sensorposition zu einem der Regal vorausfahrenden Regal,

c) Bestimmung des Antriebsrads als Master-Antriebsrad, dessen Sensor den größten Abstand zum vorausfahrenden Regal bestimmt hat, und Bestimmung des Antriebsrades als Slave-Antriebsrad, dessen Sensor den kleinsten Abstand zum vorausfahrenden Regal bestimmt hat,

d) Verminderung der Drehzahl ausschließlich des Slave-Antriebrads auf eine Solldrehzahl, wobei die Solldrehzahl durch Multiplikation der Drehzahl des Master-Antriebsrads mit einem Reduktionsfaktor erfolgt, wobei der Reduktionsfaktor bestimmt wird als 1 minus dem Absolutwert der normierten Differenz der durch die Sensoren bestimmten Abstände,

e) zyklische Wiederholung der Schritte b - d.

Im Folgenden werden bevorzugte Ausführungsformen der Erfindung anhand der Zeichnungen näher erläutert. Es zeigen:

Figur 1     eine perspektivische Ansicht einer verfahrbaren Regalanlage,

Figur 2     eine schematische Darstellung einer Aufsicht auf einzelner Regale einer Regalanlage,

Figur 3     ein Flussdiagramm eines Verfahrens zum Verfahren eines Regals einer Regalanlage.

Im Folgenden werden ferner einander ähnliche Elemente mit den gleichen Bezugszeichen gekennzeichnet.

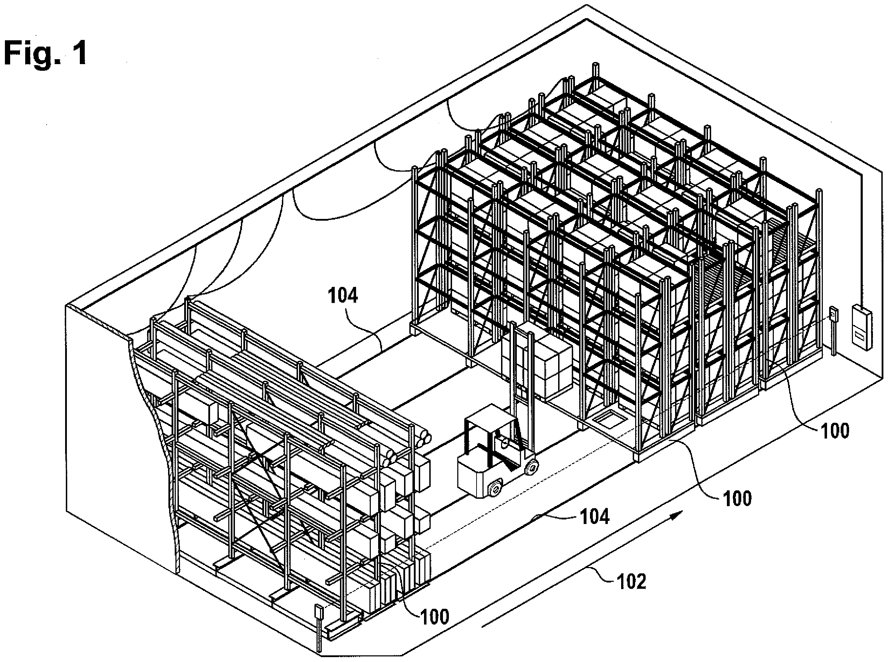

Die Figur 1 zeigt eine Regalanlage mit einer Mehrzahl von verfahrbaren Regalen 100. Die Regale können mit Rädern über den Boden der Regalanlage fahren, wobei im vorliegenden Fall Schienen 104 als Führungselemente für die Räder vorgesehen sind. Dies ist jedoch nicht zwingend notwendig und statt der Verwendung von Schienen ist es auch möglich, dass die Räder sich ohne spezielle Führung über dem Boden der Regalanlage bewegen. Aufgrund der Bewegung der Räder ist es möglich, die einzelnen Regale 100 in Richtung und entgegen der Richtung 102 zu bewegen. Dadurch kann eine Lücke zwischen einander benachbarten Regalen 100 geschaffen werden, sodass ein Regal-Bediengerät, wie beispielsweise ein Gabelstapler, in der Lage ist, in die entstehende Lücke, wie in der Figur 1 skizziert, hineinzufahren. Dadurch können zum Beispiel Paletten oder anderes Stückgut auf den jeweiligen, frei zugänglichen Regalen abgeladen werden.

Während dem Verfahrvorgang der einzelnen Regale 100 der Regalanlage muss sichergestellt werden, dass die Regale 100 immer senkrecht zu der vorgesehenen Bewegungsrichtung 102 und damit im Idealfall parallel zueinander fahren. Ein Schräglauf eines Regals könnte dazu führen, dass sich zum Beispiel das Regal auf den Führungsschienen 104 verkantet oder dass insgesamt der für die Regale zur Verfügung stehende Platz aufgrund der Schrägstellung der Regale nicht optimal ausgenutzt wird.

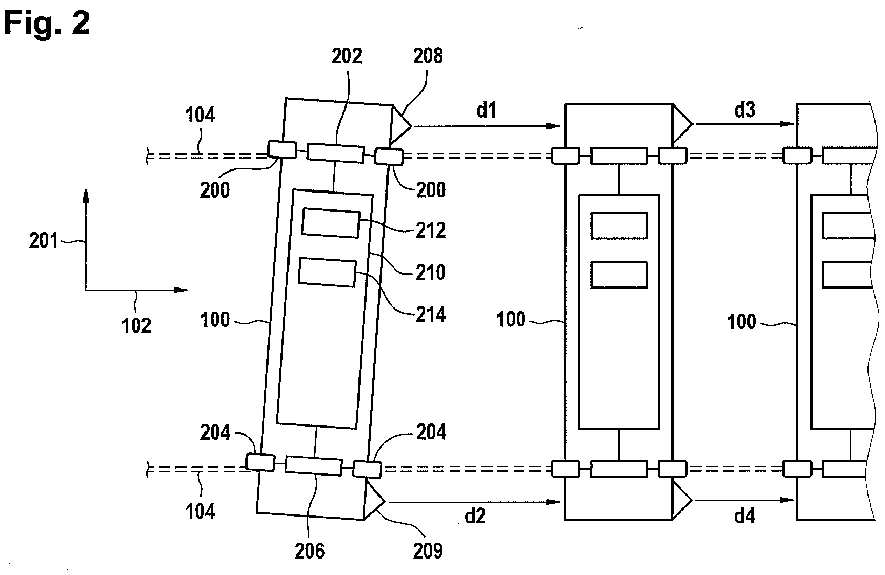

Die Figur 2 zeigte eine Aufsicht auf eine Anzahl von Regalen 100, welche hier schematisch dargestellt sind. Jedes Regal 100 erstreckt sich senkrecht zur Fahrtrichtung 102 (siehe Figur 1), wobei in der Figur 2 die Fahrtrichtung zum Beispiel von links nach rechts ist. Jedes Regal 100 weist in seiner besagten Erstreckungsrichtung, das heißt in der Figur 2 in der Richtung 201, zumindest zwei Antriebsräder 200 und 204 an einander gegenüberliegenden Seiten des Regals auf. Ferner weist jedes Regal 100 zwei Abstandssensoren 208 und 209 an einander gegenüberliegend Seiten des Regals auf. Jeder Abstandssensor ist dabei einem der Antriebsräder zugeordnet. Die Antriebsräder 200 sind also dem Abstandssensor 208 zugeordnet und die Antriebsräder 204 sind dem Abstandssensor 209 zugeordnet.

Die Abstandssensoren 208 und 209 können beispielsweise durch Funk, Infrarot oder Ultraschall den Abstand d des Sensors zum vorausfahrenden Regal bestimmen. In dem Beispiel der Figur 2 bestimmt also der Abstandssensor 208 den Abstand d1 zum rechts vorausfahrenden Regal 100 und der Abstandssensor 209 bestimmt den Abstand d2 zum vorausfahrenden Regal. In dem gezeigten Beispiel ist dabei der Abstand d1 kleiner als der Abstand d2, sodass ein Schräglauf des linken Regals gegeben ist. Dieser Schräglauf muss nun aus den obig genannten Gründen korrigiert werden, sodass nach der Korrektur die beiden linken Regale wieder parallel zueinander fahren.

Die Antriebsräder 200 bzw. 204 werden über entsprechende Antriebsmotoren 202 bzw. 206 angetrieben. Diese Antriebsmotoren 202 und 206 sind mit einer Steuereinheit 210 gekoppelt. Die Steuereinheit 210 weist neben einem Prozessor 212 einen Speicher 214 auf. Der Speicher enthält Anweisungen, welche durch den Prozessor 212 ausgeführt werden können. Dadurch ist die Steuereinheit 210 in der Lage, den Motoren 202 und 206 entsprechende Steuerbefehle zu geben, wobei die Steuerbefehle eine gewünschte Motordrehzahl bzw. Drehzahl der Antriebsräder 200 bzw. 204 umfasst.

Zum Beispiel arbeiten die Motoren 202 und 206 in an sich aus dem Stand der Technik bekannter Weise mit Frequenzumrichtern, sodass die Steuereinheit 204 entsprechende Sollwerte für Frequenz und/oder Amplitude der Ausgangswechselspannung der jeweiligen Frequenzumrichter vorgibt. Die gewünschte Motordrehzahl wird also in die besagten Sollwerte für Frequenz und/oder Amplitude der Ausgangswechselspannung der jeweiligen Frequenzumrichter umgewandelt.

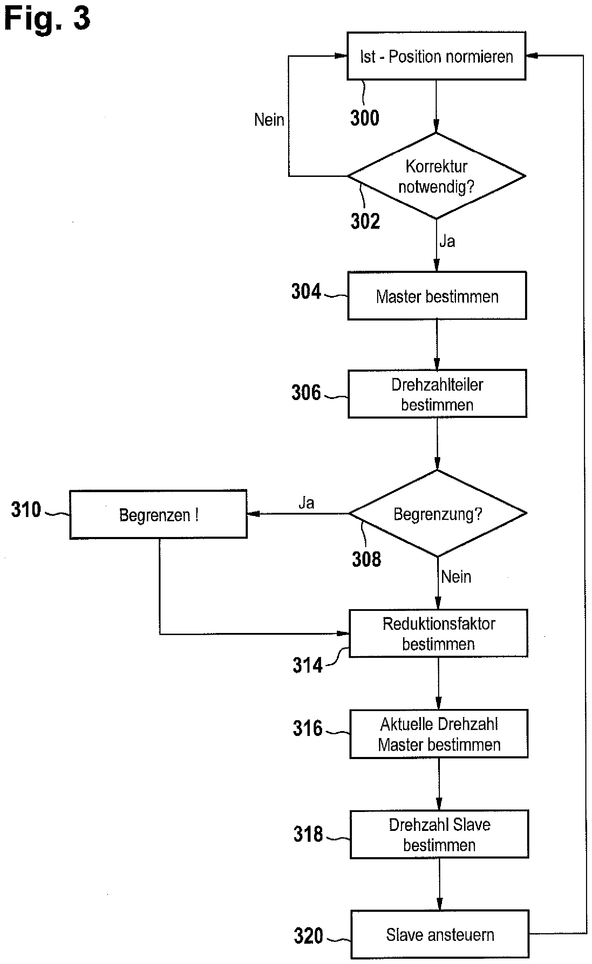

Um nun also einen Schräglauf des linken Regals 100 bezüglich des vorausfahrenden Regals 100 und damit bezüglich der Schienen 104 zu korrigieren, wird durch den Prozessor 212 ein im Speicher 214 in Form von ausführbaren Instruktionen hinterlegtes Verfahren durchgeführt, welches im Flussdiagramm der Figur 3 beispielhaft skizziert ist.

So wird zunächst in Schritt 300 für jeden der Abstandssensoren 208 und 209 die istPosition (ist-Abstand) erfasst, wobei üblicherweise ein solcher durch die Sensoren 208 und 209 gemessener Wert als Analogwert zur Verfügung gestellt wird. Da ein solcher Analogwert zum Beispiel von 0 bis 32757 Einheiten geht, handelt es sich bei diesen Einheiten lediglich um Rohwerten von Analogsensoren. Um diese auf ihren tatsächlichen Abstandswert zu bringen, erfolgt im Schritt 300 eine entsprechende Normierung des Abstandswerts. Daraus ergibt sich zum Beispiel bezüglich des Sensors 208 ein Abstandswert d1, zum Beispiel in Zentimetern und bezüglich des Abstandssensors 209 ein Wert d2, ebenfalls zum Beispiel in Zentimetern.

In Schritt 302 erfolgt eine Bestimmung, ob bezüglich der aktuell detektierten Abstände überhaupt eine Korrektur eines Schräglaufs notwendig ist. Liegt zum Beispiel überhaupt kein Schräglauf vor, das heißt die Differenz zwischen d1 und d2 ist 0, so können die nachfolgenden Schritte ausgespart werden, was den Rechenaufwand auf Seiten des Steuermoduls 210 minimiert. Ebenfalls können lediglich geringe Abweichungen zwischen d1 und d2 vernachlässigt werden, sodass nur im Falle dessen die Differenz zwischen d1 und d2 eine minimal erlaubte Differenz überschreitet, das Verfahren sich in Schritt 304 fortsetzt.

Es sei darauf verwiesen, dass im Folgenden ohne Beschränkung der Allgemeinheit die besagten Antriebsräder immer zwei einander gegenüberliegenden Antriebsräder umfassen, welche über je eine Antriebswelle miteinander gekoppelt sind. Wenn also im Folgenden lediglich von einem Master- bzw. Slave-Antriebsrad die Rede ist, so bezieht sich dies aufgrund der Wellenkopplung selbstverständlich grundsätzlich auf beide jeweiligen Antriebsräder 200 bzw. 204.

In Schritt 304 wird nun das Antriebsrad 200 bzw. 204 als "Master-Antriebsrad" ausgewählt, dessen Sensor den größten Abstand zum vorausfahrenden rechten Regal bestimmt hat. Außerdem wird jenes Antriebsrad als Slave-Antriebsrad bestimmt, dessen Sensor den kleinsten Abstand zum vorausfahrenden Regal bestimmt hat. Im Beispiel der Figur 1 bedeutet dies, dass die Antriebsräder 200 als Slave-Antriebsrad bestimmt werden und die Räder 204 als Master-Antriebsrad.

Das Master-Antriebsrad bzw. die Master-Antriebsräder 204 werden grundsätzlich mit einer maximalen, vorzugsweise sogar mit einer maximal zur Verfügung stehenden, Drehzahl betrieben. Damit wird eine größtmögliche Geschwindigkeit ausgenutzt, mit welcher die Regale 100 in der Regalanlage verfahren werden sollen.

Selbstverständlich ist es möglich, diese Maximaldrehzahl anhand verschiedener Kriterien festzulegen. Ein Kriterium betrifft dabei die Sicherheit, wobei Regale insgesamt nicht schneller als ein vorbestimmter Wert bewegt werden dürfen. Ein weiteres Kriterium könnte den Abstand betreffen, welcher bezüglich der dem Master-Antriebsrad zugeordneten Sensor 209 bestimmt wurde: Im Falle eines großen Abstandes könnte die Maximaldrehzahl sehr hoch sein, wobei im Falle eines kleiner werdenden Abstandes die Maximaldrehzahl, zum Beispiel normiert durch den aktuell gemessenen Abstand, kontinuierlich reduziert werden könnte. Dies würde zu einer dynamischen Bestimmung der Maximaldrehzahl führen. Es könnte im Beispiel der Figur 2 also eine lineare Abhängigkeit zwischen dem Abstand d2 und der Maximaldrehzahl bestehen, sodass bei Stillstand des vorauseilenden Regals das nachfolgende Regal mit geringer werdendem Abstand automatisch seine eigene Fahrgeschwindigkeit verringert. Dadurch könnte ein abruptes Abbremsen des nachfolgenden Regals vermieden werden. Eine entsprechende Steuerung bezüglich der Maximaldrehzahl könnte z.B. wie folgt aussehen:

- Wenn Abstand d2 größer als ein Maximalabstand ist, Setzen der maximalen Drehzahl auf einen Wert Maximum,

- wenn d2 zwischen dem maximalen Abstand und einem minimalen Abstand liegt, Skalieren des besagten Wertes Maximum für die besagte maximale Drehzahl mit einem Faktor, wobei der Faktor berechnet wird mit d2 geteilt durch den maximalen Abstand, d.h. Drehzahl ~ Maximum * (d2/ Maximalabstand),

- sobald der Abstand d2 kleiner als der minimale Abstand ist, Setzen der maximalen Drehzahl auf 0.

Nachdem in Schritt 304 das Master-Antriebsrad bestimmt wurde, erfolgt in Schritt 206 die Bestimmung eines sogenannten Drehzahlteilers. Der Drehzahlteiler ist dabei als der Absolutwert der normierten Differenz der durch die Sensoren bestimmten Abstände gegeben. Die Normierung der Differenz erfolgt dabei durch zum Beispiel eine maximal erlaubte Differenz der durch die Sensoren bestimmten Abstände. Konkret könnte dies im vorliegenden Beispiel zu folgender Berechnung führen:

$$\text{Drehzahlteiler} = |d1 - d2| / \text{ maximal erlaubte Differenz}.$$

Der so bestimmte Drehzahlteiler wird in Schritt 308 daraufhin untersucht, ob eine Begrenzung desselben notwendig ist. Der Grund für die möglicherweise notwendige Begrenzung liegt in einem der nachfolgenden Schritte, bei welchem ein Reduktionsfaktor (Schritt 314) bestimmt wird. Dieser Reduktionsfaktor bestimmt sich als 1 minus Drehzahlteiler und gibt als einen Multiplikator an, inwieweit die Drehzahl des Slave-Antriebsrads relativ zur Drehzahl des Master-Antriebsrads reduziert werden muss. Ergibt sich nun beispielsweise in Schritt 306 ein Drehzahlteiler mit einem Wert nahe 1, so führt dies dazu, dass der in Schritt 314 resultierende Reduktionsfaktor bei 0 liegt, was konsequenter Weise einer Reduktion der Drehgeschwindigkeit des Slave-Antriebsrads auf einen Wert 0 entspricht. Eine entsprechende vollständige Abbremsung des Slave-Antriebsrads würde jedoch zu einer gegebenenfalls erheblichen Reibung zwischen Antriebsrad und Schiene bzw. Boden führen, was vermieden werden soll.

Aus diesem Grund wird in Schritt 308 bestimmt, ob eine Begrenzung des Drehzahlteilers auf einen Maximalwert, zum Beispiel 0,9, notwendig ist. Dies ist der Fall, wenn der besagte Maximalwert überschritten wird. Wird also im Schritt 308 festgestellt, dass dort Drehzahlteiler aufgrund einer Überschreitung des Maximalwerts auf den Maximalwert zu begrenzen ist, so wird diese Begrenzung in Schritt 310 durchgeführt und der in Schritt 306 bestimmte Drehzahlteiler wird durch den Maximalwert in Schritt 310 ersetzt.

Ist hingegen eine Begrenzung gemäß Schritt 308 nicht notwendig, erfolgt unmittelbar nach Schritt 308 Schritt 314 mit der Bestimmung des Reduktionsfaktors, wie obig beschrieben. Nachdem der Reduktionsfaktor in Schritt 314 bestimmt wurde, wird in Schritt 316 die aktuelle Drehzahl des Master-Antriebsrads gemessen und bestimmt. Durch Multiplikation des Reduktionsfaktors mit der aktuellen Drehzahl des Master-Antriebsrads ergibt sich in Schritt 318 die Solldrehzahl des Slave-Antriebsrads, Die Solldrehzahl ist also proportional zu

$$\text{Drehzahl des Master-Antriebsrads} * (1 - \text{Drehzahlteiler}).$$

Praktisch gesprochen bedeutet dies, dass relativ zum Master-Antriebsrad das Slave-Antriebsrad etwas langsamer gedreht wird. In der Figur 2 werden also die Antriebsräder 200 im Vergleich zu den Antriebsrädern 204 etwas verlangsamt, sodass die obere Regalseite der Figur 2 in ihrer Position durch die untere Regalseite eingeholt wird. Die Drehgeschwindigkeit der Antriebsräder des Master-Antriebsrads 204 ist dabei unverändert. Dies führt zu einer Reduktion der Differenz der Abstände d1 und d2.

Nachdem nun also, wie beschrieben, in Schritt 320 das Slave-Antriebsrad 200 mit der reduzierten Solldrehzahl angesteuert wurde, wiederholt sich das Verfahren zyklisch, indem zu Schritt 300 gesprungen wird.

In einem praktischen Beispiel könnte das bezüglich der Figuren 2 und 3 erläuterte Verfahren also wie folgt aussehen:

Zunächst erfolgt das Einlesen der Sensoren 208 und 209 und ein Normieren der dort gemessenen Abstandswerte auf Millimeter oder Zentimeter, das heißt eine exakte Bestimmung der Abstände zum nächsten Regalwagen. Daraufhin wird die Differenz zwischen den Messwerten der beiden Sensoren errechnet. Auf Basis dieser Differenz werden anschließend Master- und Slave-Antriebsrad bestimmt. Daraufhin wird der dynamische Drehzahlteiler zyklisch errechnet und gegebenenfalls begrenzt. Wenn nun das Slave-Antriebsrad zu weit vorne fährt, wird dieses um den Drehzahlteiler abgeregelt. Ist der Drehzahlteiler zum Beispiel 0,2, wird in diesem Zyklus die Solldrehzahl des Slave-Antriebsrads auf 1 - 0,2 = 0,8, das heißt auf 80 %, heruntergeregelt (relativ zum Master-Antriebsrad). Wird bei Verwendung von Frequenzumrichtern der Master-Frequenzumrichter mit der maximalen Drehzahl in Form von einer Ansteuerung mit 50 Hz geregelt, wird also der Frequenzumrichter des Slave-Antriebsrads auf 40 Hz geregelt.

Ist nun aufgrund der damit verlangsamten Laufgeschwindigkeit des Slave-Antriebsrads die Abstandsdifferenz d1 - d2 geringer, wird konsequenter Weise die Regelung auf einen entsprechend geringeren Wert, zum Beispiel 80,5 %, vorgenommen. Dies setzt sich Zyklus für Zyklus fort, sodass es von 80,5 auf 82 %, auf 85 % usw. weitergeht, bis der Gleichlauf wiederhergestellt ist.

Wird der Abstand jedoch zyklisch größer, erfolgt die Regelung in die umgekehrte Richtung, zum Beispiel auf 78 %, 75 % usw. Die Abhängigkeit des Drehzahlteilers ist vorzugsweise allein dynamisch abhängig von der Wegdifferenz, welche durch die beiden Abstandssensoren bestimmt wird. Wird diese Differenz größer, wird die Drehzahl für den Slave immer kleiner, bis die minimale Drehzahl erreicht ist. Allerdings geht vorzugsweise vor Erreichen dieser minimalen Drehzahl die fahrbare Regalanlage in einen Störzustand.

Es sei angemerkt, dass die Ausgabe der Solldrehzahl üblicherweise wiederum über eine Normierung erfolgt. Dies ist notwendig, da die Solldrehzahl üblicherweise bei Frequenzumrichtern in Hertz angegeben wird, wobei die Ausgabe wiederum in einen Analogwert umgewandelt werden muss. Auch dies bedeutet wieder die Umwandlung in einen Integerwert, sodass eine Normierung für den Ausgang auch hier stattfinden muss.

Das in Figur 3 beschriebene Verfahren führt jedes Regal für sich selbst durch. Jedes Regal entscheidet für sich selbst, welches seiner Antriebe als Master oder Slave arbeitet. Ebenso errechnet jedes Regal die entsprechenden Drehzahlen für sich selbst. Es gibt also diesbezüglich keine übergeordnete Berechnung, die dann an einzelne Wagen weitergeleitet wird.

In einer besonderen Ausführungsform ist es jedoch möglich, dass zumindest einzelne Parameter aus dem in Figur 3 erläuterten Verfahren an nachfolgende Regale kommuniziert werden können. Beispielsweise könnte das Maß des Schräglaufs, zum Beispiel in Form der Differenz der durch die Sensoren gemessenen Abstände dem unmittelbar hinterherfahrenden Regal kommuniziert werden. Dies sollte dabei vorzugsweise nicht in Form eines Absolutwerts erfolgen, sondern in Form eines Relativwerts. Das nachfolgende Regal könnte auf Basis dieses Relativwerts selbst seine gemessenen Abstände um den Relativwert in entsprechender Weise kompensieren.

in dem Beispiel der Figur 2 könnten beispielsweise die Abstandssensoren des mittlere Regals einen Abstand d3 von 500 mm und einen Abstand d4 von 600 mm messen. Damit ergibt sich eine Differenz von d3 - d4 = -100 mm.

Werden diese -100 mm an das linke, nachfolgende Regal kommuniziert, so kann damit das linke Regal erkennen, dass bezüglich des vorderen Regals dessen untere Antriebsräder um 100 mm hinter den oberen Antriebsrädern hinterherlaufen. Beträgt nun die Differenz zwischen d1 und d2 ebenfalls die besagten -100 mm, so wird das linke Regal in der Lage sein zu erkennen, dass die gemessene Abstandsdifferenz nicht das Resultat eines eigenen Schräglaufs, sondern eines Schräglaufs des vorausgehenden Regals ist. Insofern könnte das linke Regal die selbst gemessene Differenz d1 - d2 um die Wegdifferenz d3 - d4 kompensieren, was im Ergebnis dazu führt, dass im besagten Schritt 302 in der Figur 3 festgestellt wird, dass eine Korrektur eines möglichen Schräglaufs gegenwärtig nicht notwendig ist. Durch diese Verfahrensschritte könnte insgesamt ein noch gleichmäßigerer Lauf der Regale in der Regalanlage ermöglicht werden.

Bezugszeichenliste

| 100 | Regal |
|-----|-------|
| 102 | Richtung |
| 104 | Schiene |
| 200 | Rad |
| 201 | Richtung |
| 202 | Motor |
| 204 | Rad |
| 206 | Motor |
| 208 | Abstandssensor |
| 209 | Abstandssensor |
| 210 | Steuereinheit |
| 212 | Prozessor |
| 217 | Speicher |

**Patentansprüche**

1. Verfahren zum Fahren eines Regals (100) einer Mehrzahl von fahrbaren (fahrenden) Regalen (100) einer Regalanlage in eine Fahrtrichtung (102), wobei sich das Regal (100) senkrecht zur Fahrtrichtung (102) erstreckt, wobei das Regal (100) in der Erstreckungsrichtung gesehen zumindest zwei Antriebsräder (200; 204) an einander gegenüberliegenden Seiten des Regals (100) und zwei Abstandssensoren (208; 209) an den einander gegenüberliegenden Seiten des Regals (100) aufweist, wobei jeder Abstandssensor einem Antriebsrad zugeordnet ist, wobei das Verfahren umfasst:

   a) Antrieb der Antriebsräder (200; 204) mit einer maximalen Drehzahl,
   b) Durch jeden der Abstandssensoren (208; 209), Bestimmung des Abstandes des Regals (100) im Bereich der Sensorposition zu einem dem Regal (100) vorausfahrenden Regal,
   c) Bestimmung des Antriebsrades als Master-Antriebsrad (204), dessen Sensor (209) den größten Abstand zum vorausfahrenden Regal (100) bestimmt hat, und Bestimmung des Antriebsrades als Slave-Antriebsrad (200), dessen Sensor (208) den kleinsten Abstand zum vorausfahrenden Regal (100) bestimmt hat,
   d) Verminderung der Drehzahl ausschließlich des Slave-Antriebsrads (200) auf eine Soll-Drehzahl, wobei die Solldrehzahl durch Multiplikation der Drehzahl des Master-Antriebsrads (204) mit einem Reduktionsfaktor erfolgt, wobei der Reduktionsfaktor bestimmt wird als eins minus dem Absolutwert der normierten Differenz der durch die Sensoren bestimmten Abstände,
   e) Zyklische Wiederholung der Schritte b)-d),

   wobei die Normierung der Differenz durch eine maximal erlaubte Differenz der durch die Sensoren (208; 209) bestimmten Abstände erfolgt.

2. Verfahren nach Anspruch 1, wobei die Verminderung der Drehzahl nur dann erfolgt, wenn die Differenz größer ist als eine minimal erlaubte Differenz, wobei im Falle dessen die Differenz kleiner oder gleich der minimal erlaubten Differenz ist die beiden Antriebsräder (200; 204) mit der maximalen Drehzahl angetrieben werden.

3. Verfahren nach einem der vorigen Ansprüche, wobei vor der Durchführung von Schritt d) die aktuelle Drehzahl des Master-Antriebsrads (204) gemessen wird.

**4.** Verfahren nach einem der vorigen Ansprüche, wobei der Reduktionsfaktor so begrenzt wird, dass der Reduktionsfaktor einen vorbestimmten minimalen Wert nicht unterschreiten kann.

**5.** Verfahren nach einem der vorigen Ansprüche, wobei jedes Regal (100) der Regale das Verfahren autonom für sich durchführt.

**6.** Regal (100) einer Regalanlage, wobei das Regal (100) in eine Fahrtrichtung fahrbar ist, wobei sich das Regal (100) senkrecht zur Fahrtrichtung erstreckt, wobei das Regal (100) in der Erstreckungsrichtung gesehen zumindest zwei Antriebsräder (200; 204) an einander gegenüberliegenden Seiten des Regals (100) und zwei Abstandssensoren (208; 209) an einander gegenüberliegenden Seiten des Regals (100) aufweist, wobei jeder Abstandssensor einem Antriebsrad zugeordnet ist, wobei das Regal (100) eine Steuereinheit (210) aufweist mit einem Speicher (214) und einem Prozessor (212), wobei der Speicher (214) durch den Prozessor (212) ausführbare Anweisungen aufweist, wobei aufgrund der Anweisungen folgende Schritte ausführbar sind:

a) Antrieb der Antriebsräder (200; 204) mit einer maximalen Drehzahl,
b) Durch jeden der Abstandssensoren (208; 209), Bestimmung des Abstandes des Regals (100) im Bereich der Sensorposition zu einem dem Regal (100) vorausfahrenden Regal,
c) Bestimmung des Antriebsrades als Master-Antriebsrad (204), dessen Sensor (209) den größten Abstand zum vorausfahrenden Regal (100) bestimmt hat, und Bestimmung des Antriebsrades als Slave-Antriebsrad (200), dessen Sensor (208) den kleinsten Abstand zum vorausfahrenden Regal (100) bestimmt hat,
d) Verminderung der Drehzahl ausschließlich des Slave-Antriebsrads (200) auf eine Soll-Drehzahl, wobei die Solldrehzahl durch Multiplikation der Drehzahl des Master-Antriebsrads (204) mit einem Reduktionsfaktor erfolgt, wobei der Reduktionsfaktor bestimmt wird als eins minus dem Absolutwert der normierten Differenz der durch die Sensoren bestimmten Abstände,
e) Zyklische Wiederholung der Schritte b)-d),

wobei die Normierung der Differenz durch eine maximal erlaubte Differenz der durch die Sensoren (208; 209) bestimmten Abstände erfolgt.

**Claims**

**1.** A method for moving a shelf (100) of a plurality of movable (moving) shelves (100) of a shelving unit in a direction of movement (102), wherein the shelf (100) extends perpendicularly to the direction of travel (102), wherein the shelf (100), as considered in the direction of extent, has at least two drive wheels (200; 204) on opposite sides of the shelf (100) and to distance sensors (208; 209) on opposite sides of the shelf (100), wherein each distance sensor is paired with a drive wheel, wherein the method comprises the following steps:

a) driving the drive wheels (200; 204) with a maximum speed,
b) by means of each of the distance sensors (208; 209), determining the distance of the shelf (100) in the region of the sensor position from a shelf arranged ahead of the shelf (100),
c) determining the drive wheel of which the sensor (209) has determined the greatest distance from the shelf (100) arranged ahead as master drive wheel (204), and determining the drive wheel of which the sensor (208) has determined the smallest distance from the shelf (100) arranged ahead as slave drive wheel (200),
d) reducing the speed exclusively of the slave drive wheel (200) to a target speed, wherein the target speed is provided by multiplying the speed of the master drive wheel (204) by a reduction factor, wherein the reduction factor is determined as one, minus the absolute value of the standardised difference of the distances determined by the sensors,
e) repeating steps b)-d) in a cyclical manner,

wherein the difference is standardised by a maximum allowed difference of the distances determined by the sensors (208; 209).

**2.** The method according to claim 1, wherein the speed is only reduced when the difference is greater than a minimum allowed difference, wherein, in the case that the difference is less than or equal to the minimum allowed difference, the two drive wheels (200; 204) are driven at the maximum speed.

3. The method according to either one of the preceding claims, wherein, before step d) is performed, the current speed of the master drive wheel (204) is measured.

4. The method according to any one of the preceding claims, wherein the reduction factor is limited such that the reduction factor cannot fall below a predetermined minimum value.

5. The method according to any one of the preceding claims, wherein each shelf (100) of the shelves performs the method autonomously for itself.

6. A shelf (100) of a shelving unit, wherein the shelf (100) can be moved in a direction of movement, wherein the shelf (100) extends perpendicularly to the direction of travel, wherein the shelf (100), as considered in the direction of extent, has at least two drive wheels (200; 204) on opposite sides of the shelf (100) and two distance sensors (208; 209) on opposite sides of the shelf (100), wherein each distance sensor is paired with a drive wheel, wherein the shelf (100) comprises a control unit (210) with a memory (214) and a processor (212), wherein the memory (214) comprises instructions executable by the processor (212), wherein, on the basis of the instructions, the following steps can be performed:

a) driving the drive wheels (200; 204) with a maximum speed,
b) by means of each of the distance sensors (208; 209), determining the distance of the shelf (100) in the region of the sensor position from a shelf arranged ahead of the shelf (100),
c) determining the drive wheel of which the sensor (209) has determined the greatest distance from the shelf (100) arranged ahead as master drive wheel (204), and determining the drive wheel of which the sensor (208) has determined the smallest distance from the shelf (100) arranged ahead as slave drive wheel (200),
d) reducing the speed exclusively of the slave drive wheel (200) to a target speed, wherein the target speed is provided by multiplying the speed of the master drive wheel (204) by a reduction factor, wherein the reduction factor is determined as one, minus the absolute value of the standardised difference of the distances determined by the sensors,
e) repeating steps b)-d) in a cyclical manner,

wherein the difference is standardised by a maximum allowed difference of the distances determined by the sensors (208; 209).

## Revendications

1. Procédé de guidage d'une étagère (100) d'une multiplicité d'étagères pouvant être guidées (guidées) (100) d'une installation à base d'étagères dans une direction de déplacement (102),
où l'étagère (100) s'étend verticalement par rapport à la direction de déplacement (102), où l'étagère (100) présente, vu dans la direction d'extension, au moins deux roues d'entraînement (200 ; 204) sur des côtés opposés l'un à l'autre de l'étagère (100) et deux capteurs de distance (208 ; 209) sur deux côtés opposés l'un à l'autre de l'étagère (100), où chaque capteur de distance est associé à une roue d'entraînement, où le procédé comprend :

a) l'entraînement des roues d'entraînement (200 ; 204) avec un nombre de tours maximal,
b) par chacun des capteurs de distance (208 ; 209), la détermination de la distance de l'étagère (100) dans la région de la position du capteur et une étagère juste avant par rapport à l'étagère (100,
c) la définition de la roue d'entraînement, dont le capteur (209) a déterminé la plus grande distance par rapport à l'étagère juste avant (100) en tant que roue d'entraînement maitresse (204), et la définition de la roue d'entraînement, dont le capteur (208) a déterminé la distance la plus petite par rapport à l'étagère juste avant (100) en tant que roue d'entraînement esclave (200),
d) la diminution du nombre de tours uniquement de la roue d'entraînement esclave (200) jusqu'à un nombre souhaité, où le nombre de tours souhaité est effectué par une multiplication du nombre de tours de la roue d'entraînement maîtresse (204) par un facteur de réduction, où le facteur de réduction est déterminé sous forme d'un minimum de la valeur absolue de la différence normalisée des distances déterminées par les capteurs,
e) la répétition cyclique des étapes b) à d).

où la normalisation de la différence a lieu par une différence maximale permise des distances déterminées par les capteurs (208 ; 209).

**2.** Procédé selon la revendication 1, dans lequel la diminution du nombre de tours n'a lieu que lorsque la différence est supérieure à une différence minimale permise, où, dans le cas où la différence est inférieure ou égale à la différence minimale permise, les deux roues d'entraînement (200 ; 204) sont entraînées avec le nombre de tours maximal.

**3.** Procédé selon l'une des revendications précédentes, dans lequel, avant l'exécution de l'étape d), le nombre de tours réel de la roue d'entraînement maîtresse (204) est mesuré.

**4.** Procédé selon l'une des revendications précédentes, dans lequel le facteur de réduction est limité de telle manière que le facteur de réduction ne peut être en-dessous d'une valeur minimale prédéfinie.

**5.** Procédé selon l'une des revendications précédentes, dans lequel chaque étagère (100) parmi les étagères exécute elle-même le procédé de manière autonome.

**6.** Etagère (100) d'une installation d'étagères, où l'étagère (100) peut être guidée dans une direction de déplacement, où l'étagère (100) s'étend verticalement par rapport à la direction de déplacement, où l'étagère (100) présente, vu dans la direction d'extension, au moins deux roues d'entraînement (200 ; 204) sur des côtés opposés l'un à l'autre de l'étagère (100) et deux capteurs de distance (208 ; 209) sur deux côtés opposés l'un à l'autre de l'étagère (100), où chaque capteur de distance est associé à une roue d'entraînement, où l'étagère présente une unité de commande (210) dotée d'une mémoire (214) et d'un processeur (212), où la mémoire (214) présente des instructions exécutables par le processeur (212), où, en raison des instructions, les étapes suivantes peuvent être exécutées :

a) entraînement des roues d'entraînement (200 ; 204) avec un nombre de tours maximal,
b) par chacun des capteurs de distance (208 ; 209), la détermination de la distance de l'étagère (100) dans la région de la position du capteur jusqu'à une étagère juste avant par rapport à l'étagère (100),
c) la définition de la roue d'entraînement, dont le capteur (209) a déterminé la plus grande distance par rapport à l'étagère juste avant (100) en tant que roue d'entraînement maitresse (204), et la définition de la roue d'entraînement, dont le capteur (208) a déterminé la distance la plus petite par rapport à l'étagère juste avant (100) en tant que roue d'entraînement esclave (200),
d) la diminution du nombre de tours uniquement de la roue d'entraînement esclave (200) jusqu'à un nombre souhaité, où le nombre de tours souhaité est effectué par une multiplication du nombre de tours de la roue d'entraînement maîtresse (204) par un facteur de réduction, où le facteur de réduction est déterminé sous forme d'un minimum de la valeur absolue de la différence normalisée des distances déterminées par les capteurs,
e) la répétition cyclique des étapes b) à d).

où la normalisation de la différence a lieu par une différence maximale permise des distances déterminées par les capteurs (208 ; 209).

**Fig. 1**

# Fig. 2

EP 2 960 185 B1

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040226256 A1